# EUROPÄISCHE PATENTANMELDUNG

(11) **EP 1 829 677 A1**
(43) Veröffentlichungstag der Anmeldung: **05.09.2007**
(21) Anmeldenummer: 07100090.5
(22) Anmeldetag: 04.01.2007
(51) Int. Cl.: B32B 27/08, C08J 5/18, C08J 7/04

(54) **Verbundfolie**

(30) Priorität: 18.01.2006 DE 102006002596
(71) Anmelder: tesa AG, 20253 Hamburg (DE)
(72) Erfinder: Dr. Dollase, Thilo, 22397, Hamburg (DE); Escudero Vallejo, Aranzazu, 22769, Hamburg (DE); Dr. Keite-Telgenbüscher, Klaus, 22529, Hamburg (DE); Dr. Stadler, Stefan, 22359, Hamburg (DE); Blank, Carsten, 21255, Tostedt (DE)

(57) **Zusammenfassung**

Die Erfindung betrifft eine Verbundfolie. Dabei ist vorgesehen, dass die Verbundfolie eine polymere Trägerfolie und eine polymere Lackschicht umfasst, wobei die Lackschicht
- eine Abriebfestigkeit, ausgedrückt als Bleistifthärte, von mindestes 4H; und
- eine solche Flexibilität aufweist, dass die Lackschicht bei Biegen der Verbundfolie um die beiden engbenachbarten Kanten eines Metallbandes mit 100 µm Dicke, nicht bricht oder von der Trägerfolie abplatzt;
und wobei die Lackschicht folgende optische Eigenschaften aufweist:
- eine Transmission bei 400, 600 und 800 nm von mindestens 85 %, ermittelt durch Beschichten der die Lackschicht bildenden Formulierung mit 5 µm Dicke auf einen Objektträger, Aushärten der Lackschicht und Bestimmen des Verhältnisses der Transparenz des Objektträgers mit der Lackschicht zu einem unbeschichteten Objektträger; und
- eine Trübung von höchstens 5 %, bestimmt durch Haze-Messung.

## Beschreibung

Die Erfindung betrifft eine Verbundfolie, umfassend eine Trägerfolie und eine Lackschicht, sowie ein Verfahren zur Herstellung einer solchen Verbundfolie sowie der Verwendung.

Kunststoffe haben sich längst als Materialien für vielfältige Anwendungen etabliert und kommen heutzutage in unterschiedlichster Form wie beispielsweise als Bauteile, als Verkleidungselemente und für Verglasungen zum Einsatz. In vielen Bereichen haben sie dabei klassische Werkstoffe wie Metall, Holz, Keramik oder Silikatgläser abgelöst. Einige Anwendungen wären darüber hinaus ohne Kunststoffe gar nicht realisierbar. Die Erfolgsgeschichte der Kunststoffe ist sicherlich zum einen in ihrer recht einfachen Verarbeitbarkeit begründet. Folien, Platten und Profile können in kontinuierlichen Prozessen beispielsweise durch Extrusion vorteilhaft hergestellt werden. Elemente mit komplizierterer Geometrie lassen sich beispielsweise durch Spritzgusstechniken realisieren. Formgebungsverfahren sind bei vergleichsweise niedrigen Temperaturen durchführbar. Weitere Vorteile umfassen das gegenüber klassischen Rohstoffen reduzierte Gewicht. Trotz dieser Vorteile weisen Kunststoffe aber je nach Sorte für spezifische Anwendungen auch Verbesserungspotenzial auf. Im Allgemeinen reicht bei Kunststoffen die Alterungsbeständigkeit und generell die Resistenz gegenüber äußeren Einflüssen nicht an diejenige von vielen klassischen Werkstoffen heran. Ansätze, um im Hinblick auf das Alterungsverhalten zu verbesserten Werkstoffen auf Kunststoffbasis zu gelangen, beinhalten die Verwendung von Zuschlagstoffen, wie Alterungsschutzmitteln, Antioxidantien und UV-Schutzmitteln. Ein alternativer Weg, um kunststoffbasierende Materialien zu optimieren und für eine noch breitere Palette von Anwendungen einsetzbar zu machen, liegt darin, die Oberflächen der Werkstücke mit einem Schutzlack zu beschichten. Diese Variante bietet sich insbesondere auch dann an, wenn die Werkstücke gegenüber einer anderen Art äußerer Einflüsse robuster ausgerüstet werden sollen, nämlich der mechanischen Beanspruchung ihrer Oberfläche durch Abrieb oder Zerkratzen.

Für die resistente Ausrüstung von Kunststoffsubstraten gegenüber solchen mechanischen Beanspruchungen ist eine Vielzahl von Lacksystemen von einer Reihe von Anbietern erhältlich. Ein Großteil der verfügbaren Lackrezepturen ist thermisch härtbar. Damit ist es möglich, Beschichtungen auch auf dreidimensionalen Gebilden mit kompliziert gestalteter Oberfläche vollständig auszuhärten. Jedoch dürfen dabei die Härtungstemperaturen die Obergrenze der Temperaturstabilität der Kunststoffsubstrate nicht übersteigen, was je nach Kunststoffsorte und Aushärtungsmechanismus nicht immer möglich ist.

Um dieses Problem zu umgehen, wurden daher Lackrezepturen entwickelt, die sich durch Bestrahlung, insbesondere durch Bestrahlung mit ultravioletter Strahlung oder durch Elektronenstrahlen, aushärten lassen. Ein Beispiel für Anwendungen für Polycarbonatsubstrate ist in US 4,198,465 durch General Electric gegeben. Ein solcher Aushärtungsprozess läuft im Allgemeinen bei niedrigeren Temperaturen ab, so dass die Wärmebelastung der Kunststoffsubstrate wesentlich geringer ist, als es bei der Verwendung thermisch härtender Schutzlacksysteme der Fall wäre. Einen Überblick über die Technologie der strahlenhärtbaren Lacke und vielfältige Verwendungsmöglichkeiten kann man sich durch Studium von Übersichten verschaffen, die zum Beispiel bei Dowbenko und Kollegen [R. Dowbenko, C. Friedlander, G. Gruber, P. Prucnal, M. Wismer, Progr. Org. Coat., 1983, 11, 71], bei Holman und Oldring [R. Holman, P. Oldring (Hrsg.), UV and EB Curing Formulations for Printing Inks, Coatings and Paints, 2. Aufl., 1988, SITA-Technology, London], in einem mehrbändigen Werk von Oldring [P. Oldring (Hrsg.), Chemistry & Technology of UV & EB Formulations for Coatings, Inks & Paints, 1991, SITA-Technology, London] oder bei C. Decker [C. Decker in Materials Science and Technology, R. W. Cahn, P. Hansen, E. J. Kramer (Hrsg.), Band 18, 1997, Wiley-VCH, Weinheim] zu finden sind.

Zusätzlich zu den oben beispielhaft genannten Formkörpern finden Kunststoffe in einer weiteren Gestaltungsform breite Anwendung als Folien, die zum Beispiel im Verpackungsbereich oder zur Abdeckung von Oberflächen, sei es aus dekorativen Gründen oder zu Schutzzwecken, oder als Trägermaterialien für selbstklebende Produkte eingesetzt werden. Dabei kann es ebenfalls gewünscht sein, die gegenüber der Umgebung exponierte Seite, also denjenigen Teil der Folie, der äußeren Einflüssen besonders stark ausgesetzt ist, in ihrer Resistenz gegenüber beispielsweise mechanischer Belastung wie Abrieb oder Zerkratzen zu optimieren. Auch hier bietet sich der Einsatz von Schutzlacken an.

US 4,557,980 der Martin Processing Inc. beschreibt strahlenhärtbare Klarlacke, die in einer Schichtdicke zwischen 1 µm und 2,5 µm auf Foliensubstrate wie Polyesterfilmen beschichtet werden, um die Abriebfestigkeit der Folienoberfläche zu steigern. Zum Einsatz kommen dabei Formulierungen basierend auf unterschiedlich stark funktionalisierten Acrylaten. US 4,319,811 der GAF Corp. offenbart auf einem Gemisch verschiedenfunktioneller Acrylate basierende Rezepturen, die ebenfalls strahlenhärtbar sind und die zur Verbesserung der Abriebfestigkeit u. a. von Kunststofffolien dienen. Strahlenhärtbare Lackharzrezepturen zur Oberflächenbehandlung von Kunststofffolien sind also bekannt.

Zur weiteren Verbesserung der Abriebfestigkeit wird in der Literatur die Verwendung von anorganischen Partikeln, insbesondere von anorganischen Nanopartikeln in Lackharzformulierungen beschrieben. Dabei wurden Rezepturen vorgeschlagen, in denen kolloidale Kieselsäure in die Lackharzformulierung eingemischt wird, wie zum Beispiel in EP 0 050 996 B1 durch Mitsui Petrochemical und in US 4,310,600 durch American Hoechst Corp. dargestellt ist. Diese Nanopartikel sind nach der Aushärtung nicht mit dem organischen Netzwerk chemisch verknüpft und die resultierenden Lackhärten sind relativ niedrig. Im Gegensatz dazu wurden zudem Rezepturen vorgeschlagen, in denen Partikel zum Einsatz kommen, die derartig ausgerüstet sind, dass während der Aushärtung über die Wirkung von Kopplungsreagenzien eine chemische Verknüpfung zwischen Partikeln und Lackharzmatrix ausgebildet wird. Dies wurde umfangreich für Partikel wie beispielsweise pyrogene und gefällte Kieselsäuren beschrieben. Beispiele sind in US 4,482,656 der Battelle Corp., in EP 1 153 090 B1 des Instituts für Oberflächenmodifizierung oder durch Bauer und Kollegen [F. Bauer, V. Sauerland, H.-J. Gläsel, H. Ernst, M. Findeisen, E. Hartmann, H. Langguth, B. Marquardt, R. Mehnert, Macromol. Mater. Eng., 2002, 287, 546] beschrieben. Verwendung solcher Rezepturen für die Oberflächenbehandlung von Foliensubstraten sind diesen Veröffentlichungen nicht zu entnehmen. Ebenso ist bekannt, dass kolloidale Kieselsäure, die in ähnlicher Weise oberflächenmodifiziert wurde, eingesetzt werden kann. Beispiele für solche Formulierungen sind zum Beispiel durch General Electric offenbart worden (siehe beispielsweise US 4,348,462, US 4,478,876 oder L. N. Lewis, D. Katsamberis, J. Appl. Polym. Sci., 1991, 42, 1551). Auch in diesem Fall ist aus der Publikation nicht ersichtlich, dass entsprechende Formulierungen zur Oberflächenbehandlung von Foliensubstraten gedacht sind. Nanopartikelhaltige Lackrezepturen, die zusätzlich weitere, sehr spezielle Bestandteile enthalten, sind dagegen in JP 01 266 155 durch Sunstar und US 5,104,929 durch 3M auch für die Verwendung auf Foliensubstraten beschrieben.

Heute sind verschiedene folienförmige Produkte bekannt, die der Beschreibung nach mit Schutzlacken versehen sind oder versehen werden können. Die Aufgabe des Schutzlacks besteht dabei darin, das eigentliche Folienmaterial oder weitere auf ihm befindliche Funktionsschichten gegen äußere Einflüsse widerstandsfähiger zu machen. Beispiele sind in US 6,440,551 durch CPFilms und in US 6,329,041 und 6,638,606 durch Dai Nippon Printing sowie in DE 10 2004 046 767 durch CKT Folientechnik offenbart.

Es besteht jedoch weiterhin der Bedarf an Verbundfolien, die beispielsweise aber insbesondere als Dekorfolien, informationstragende Folien oder datenspeichernde Folien verwendet werden können und bei denen der optische Eindruck des Dekors, die Lesbarkeit der Information beziehungsweise die Funktionstüchtigkeit der Datenspeicherung in Bezug auf Datenlesbarkeit und/oder Datenschreibbarkeit über einen langen Zeitraum auch trotz mechanischer Beanspruchung der Oberfläche gewährleistet ist. Es besteht ferner ein Bedarf an selbstklebenden Verbundfolien mit derartigen Eigenschaften, die auf ein Substrat aufgebracht werden können, das mit beispielsweise einem Dekor, einer Information oder der Möglichkeit der Datenspeicherung versehen werden soll.

Aufgabe der Erfindung ist somit, eine Verbundfolie mit verbesserten Oberflächeneigenschaften anzugeben. Ferner sollen ein Verfahren zur Herstellung derartiger Verbundfolien sowie deren Verwendungen angeben werden.

Diese Aufgabe wird durch die Merkmale der Ansprüche 1, 19 und 25 gelöst. Zweckmäßige Ausgestaltungen der Erfindung ergeben sich aus den Merkmalen der Ansprüche 2 bis 18, 20 bis 24 und 26.

Nach Maßgabe der Erfindung ist eine Verbundfolie vorgesehen, die eine polymere Trägerfolie und eine polymere Lackschicht umfasst, wobei die Lackschicht
- eine Abriebfestigkeit, ausgedrückt als Bleistifthärte, von mindestes 4H; und
- eine solche Flexibilität aufweist, dass die Lackschicht bei Biegen der Verbundfolie um die beiden engbenachbarten Kanten eines Metallbandes mit 100 µm Dicke, nicht bricht oder von der Trägerfolie abplatzt;
und wobei die Lackschicht folgende optische Eigenschaften aufweist:
- eine Transmission bei 400, 600 und 800 nm von mindestens 85 %, ermittelt durch Beschichten der die Lackschicht bildenden Formulierung mit 5 µm Dicke auf einen Objektträger, Aushärten der Lackschicht und Bestimmen der Transparenz des Objektträgers mit der Lackschicht im Vergleich zu einem unbeschichteten Objektträger; und
- eine Trübung von höchstens 5 %, bestimmt durch Haze-Messung.

Dabei wird die Abriebfestigkeit der Lackschicht gemäß dem nachfolgend beschriebenen Test B; die Flexibilität der Lackschicht gemäß Test C, die Transmission der Lackschicht gemäß Test E und die Trübung gemäß Test F bestimmt.

Die Lackschicht sollte ferner eine Oberflächenrauhigkeit von höchstens 0,3 µm, ermittelt als Durchschnittswert aus drei Bestimmungen der jeweils größten Höhe des Oberflächenprofils in Beschichtungsrichtung aufweisen. Die Oberflächenrauhigkeit wird gemäß dem nachfolgend beschriebenen Test D bestimmt.

Auf der Seite der Trägerfolie, die der Lackschicht abgewandt ist, kann eine Klebschicht ausgebildet sein. Auf diese Weise wird eine einseitig selbstklebende Verbundfolie erhalten. Zwischen der Trägerfolie und der Lackschicht können weitere Schichten vorgesehen sein. Ebenso können zwischen der Trägerfolie und der Klebschicht weitere Schichten vorgesehen sein.

Die Trägerfolie, die Lackschicht und die Klebschicht können unabhängig voneinander mehrschichtig aufgebaut sein. Insbesondere kann die Lackschicht aus mehreren Teilschichten aufgebaut sein.

Die Lackformulierung zur Herstellung der Lackschicht ist bevorzugt frei von silikonhaltigen Additiven.

Die Erfindung ermöglicht es, Verbundfolien, insbesondere Dekorfolien, informationstragende Folien oder datenspeichernde Folien herzustellen, deren Funktionsfähigkeit durch einen Schutzlacküberzug mit optisch besonders hoher Qualität, hoher Flexibilität und hoher Härte geschützt und damit konserviert ist. Die erfindungsgemäßen Verbundfolien, wie sie in der Beschreibung, dem Beispiel und den Ansprüchen detailliert dargestellt sind, sind über einen längeren Zeitraum hinweg und/oder bei ausgeprägteren mechanischen Belastungen bei im Wesentlichen gleichbleibender Qualität der jeweiligen Funktion verwendbar. Erfindungsgemäße Produkte weisen damit eine längere Lebensdauer auf als Produkte, die nicht mit einer erfindungsgemäßen Lackschicht ausgerüstet sind. Die erfindungsgemäße Lackschicht wird im Hinblick auf ihre Schutzfunktion im Folgenden auch als Schutzlack bezeichnet.

Die Erfindung wird nachfolgend anhand von Zeichnungen näher erläutert. Dabei zeigen
- Fig. 1: eine erste Ausführungsform einer erfindungsgemäßen Verbundfolie, die aus einer Trägerfolie und einer Lackschicht besteht; und
- Fig. 2: eine zweite Ausführungsform einer erfindungsgemäßen Verbundfolie, die aus einer Trägerfolie, einer Lackschicht und einer Klebschicht besteht.

Die vorliegende Erfindung betrifft Verbundfolien, die zumindest eine abriebfeste und flexible Lackschicht mit besonders hoher optischer Qualität aufweisen. In einer Ausführungsform umfasst die Verbundfolie ferner einer Klebschicht, so dass eine einseitig selbstklebende Verbundfolie erhalten wird. Spezielle Ausführungsformen umfassen einseitig selbstklebende Verbundfolien in Form von Selbstklebefolien, Selbstklebebändern und Selbstklebeetiketten. Beispiele für erfindungsgemäße Verbundfolien sind somit insbesondere selbstklebende Dekorfolien, selbstklebende informationstragende Produkte und selbstklebende datenspeichernde Produkte, die mit der erfindungsgemäßen abriebfesten und flexiblen Lackschicht überzogen sind, so dass die optische Qualität der Produktoberfläche also insbesondere der optische Eindruck des Dekors, die Lesbarkeit der Information beziehungsweise die Funktionstüchtigkeit der Datenspeicherung im Hinblick auf Datenlesbarkeit und/oder Datenschreibbarkeit über einen langen Zeitraum auch trotz mechanischer Beanspruchung der Oberfläche gewährleistet ist. Bei den erfindungsgemäßen Verbundfolien handelt es sich um bahnförmige Folienmaterialien mit einer Breite von bevorzugt mindestens 30 cm, sehr bevorzugt mindestens 50 cm, die je nach späterer Anwendung weiter zugeschnitten oder anderweitig konfektioniert wurden oder werden können.

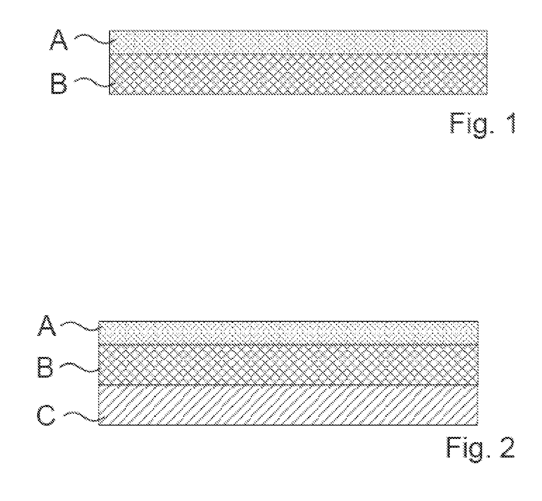

Nach Fig. 1 umfasst die erfindungsgemäße Verbundfolie zumindest eine Lackschicht A und eine Trägerfolie B. Die Lackschicht A befindet sich auf der Trägerfolie B. Zwischen der zumindest einen abriebfesten und flexiblen Lackschicht A und der zumindest einen Trägerfolie B können beliebig viele weitere Schichten gleicher oder verschiedener Art zum Einsatz kommen. Als Beispiele für solche weiteren Schichten seien Kaschierkleberschichten, weitere Trägerfolien, geschäumte Schichten, Barriereschichten, Primerschichten und Schichten, mittels derer selbst und/oder in Kombination mit weiteren Schichten Licht reflektiert werden kann, genannt, ohne sich durch diese Aufzählung einschränken zu wollen.

In Fig. 2 weist die Verbundfolie ferner eine Klebschicht C auf, die auf der Seite der Trägerfolie B ausgebildet ist, die von der Lackschicht A abgewandt ist. Bei der Klebschicht A handelt es sich vorzugsweise um eine Haftklebemassenschicht. Die zumindest eine Haftklebemasseschicht C stellt im erfindungsgemäßen Verbund die unterste Lage dar, die zumindest eine abriebfeste und flexible Lackschicht A die oberste. Die zumindest eine Trägerfolie B befindet sich zwischen diesen beiden Schichten. Zwischen der zumindest einen Haftklebemassenschicht C und der zumindest einen Trägerfolie B können beliebig viele weitere Schichten gleicher oder verschiedener Art zum Einsatz kommen. Ebenso können auch zwischen der zumindest einen abriebfesten und flexiblen Lackschicht A und der zumindest einen Trägerfolie B beliebig viele weitere Schichten gleicher oder verschiedener Art zum Einsatz kommen. Als Beispiele für solche weiteren Schichten seien Kaschierkleberschichten, weitere Trägerfolien, geschäumte Schichten, Barriereschichten, Primerschichten und Schichten, mittels derer selbst und/oder in Kombination mit weiteren Schichten Licht reflektiert werden kann, genannt, ohne sich durch diese Aufzählung einschränken zu wollen.

Die erfindungsgemäßen einseitig selbstklebenden Verbundfolien werden bevorzugt auf der Seite der zumindest einen Haftklebemassenschicht C mit einer Trennfolie oder einem Trennpapier versehen, das vor der Applikation des Produkts auf dem gewünschten Substrat entfernt wird.

Die erfindungsgemäß vorgesehene, zumindest eine abriebfeste und flexible Lackschicht A wird bevorzugt durch Härtung strahlenhärtbarer Formulierungen gewonnen. Erfindungsgemäße Lackformulierungen enthalten typischerweise zumindest eine Verbindung, die zumindest eine (Meth)acrylat-Funktion, bevorzugt zumindest zwei (Meth)acrylat-Funktionen enthält, sowie zumindest eine weitere Verbindung, die zumindest zwei (Meth)acrylat-Funktionen, bevorzugt zumindest drei (Meth)acrylat-Funktionen enthält. Weitere Verbindungen mit zumindest einer (Meth)acrylat-Funktion bevorzugt aber höherer (Meth)acrylat-Funktionalität einzusetzen, ist im Sinne dieser Erfindung vorteilhaft.

Kommen Verbindungen zum Einsatz, die eine (Meth)acrylat-Funktion tragen, werden im Sinne dieser Erfindung bevorzugt (Meth)acrylat-Monomere eingesetzt, die weiter unten als Monomere für Haftklebemassen der vorteilhaft einsetzbaren Haftklebemassenschicht C genannt werden, und insbesondere solche, die der allgemeinen Strukturformel (I) entsprechen. Weiterhin können aliphatische oder aromatische insbesondere ethoxylierte oder propoxylierte Polyethermono(meth)acrylate, aliphatische oder aromatische Polyestermono(meth)acrylate, aliphatische oder aromatische Urethanmono(meth)acrylate oder aliphatische oder aromatische Epoxymono(meth)acrylate als Verbindungen, die eine (Meth)acrylat-Funktion tragen, eingesetzt werden.

Bevorzugt werden als Verbindungen, die zumindest zwei (Meth)acrylatfunktionen tragen, eine oder mehrere Verbindungen aus der Liste umfassend difunktionelle aliphatische (Meth)acrylate wie 1,4-Butandioldi(meth)acrylat, 1,6-Hexandioldi(meth)acrylat, Dipropylenglykoldi(meth)acrylat, Tricyclodecandimethyloldi(meth)acrylat, trifunktionelle aliphatische (Meth)acrylate wie Trimethylolpropantri(meth)acrylat, tetrafunktionelle aliphatische (Meth)acrylate wie Ditrimethylolpropantetra(meth)acrylat oder Ditrimethylolpropantetra(meth)acrylat, pentafunktionelle aliphatische (Meth)acrylate wie Dipentaerythritolmonohydroxypenta(meth)acrylat, hexafunktionelle aliphatische (Meth)acrylate wie Dipentaerythritolhexa(meth)acrylat eingesetzt. Ferner können aliphatische oder aromatische insbesondere ethoxylierte und propoxylierte Polyether(meth)acrylate mit insbesondere zwei, drei, vier oder sechs (Meth)acrylat-Funktionen wie ethoxyliertes Bisphenol A Di(meth)acrylat, Polyethylenglykoldi(meth)acrylat, propoxyliertes Trimethylolpropantri(meth)acrylat, propoxyliertes Glyceroltri(meth)acrylat, propoxyliertes Neopentylglyceroldi(meth)acrylat, ethoxyliertes Trimethyloltri(meth)acrylat, ethoxyliertes Trimethylolpropandi(meth)acrylat, ethoxyliertes Trimethylolpropantri(meth)acrylat, Tetraethylenglykoldi(meth)acrylat, ethoxyliertes Neopentylglykoldi(meth)acrylat, propoxyliertes Pentaerythritoltri(meth)acrylat, Dipropylenglykoldi(meth)acrylat, ethoxyliertes Trimethylolpropanmethyletherdi(meth)acrylat, aliphatische oder aromatische Polyester(meth)acrylate mit insbesondere zwei, drei, vier oder sechs (Meth)acrylat-Funktionen, aliphatische oder aromatische Urethan(meth)acrylate mit insbesondere zwei, drei, vier oder sechs (Meth)acrylat-Funktionen, aliphatische oder aromatische Epoxy(meth)acrylate mit insbesondere zwei, drei, vier oder sechs (Meth)acrylat-Funktionen erfindungsgemäß eingesetzt werden. Ferner können mehrfach ungesättigte Vinylether vorteilhaft zum Einsatz kommen.

In einer weiter verbesserten Auslegung dieser Erfindung enthalten die erfindungsgemäßen Formulierungen, aus denen die zumindest eine abriebfeste und flexible Lackschicht A gewonnen wird, zumindest eine Sorte an anorganischen Oxiden in partikulärer Form. Die Oberfläche dieser Partikel ist bevorzugt derartig funktionalisiert, dass die Partikel nicht nur eine stabile Suspension in der durch das Lackharzgemisch gebildeten organischen Matrix bilden, sondern auch während des Aushärtungsvorgangs mit dem sich bildenden organischen Netzwerk chemisch verknüpft werden können.

Besonders vorteilhaft ist es, wenn eine derartige Oberflächenfunktionalisierung durch Umsetzung der Partikel mit Kopplungsreagenzien wie insbesondere ungesättigten Silanen oder Titanaten erfolgt. Siehe hierzu beispielsweise L. N. Lewis, D. Katsamberis, J. Appl. Polym. Sci., 1991, 42, 1551, EP 460 560 A2 der Kawasaki Steel, EP 1 366 112 B1 der Hansechemie oder US 6,136,912 der Clariant SA. Die Kopplungsreagenzien weisen dabei zum einen die Möglichkeit auf, mit Gruppen der Partikeloberfläche zu reagieren. Hierfür sind besonders Alkoxy-Gruppen, wie insbesondere Methoxy- oder Ethoxy-Gruppen, Acetoxy-Gruppen und Chlorid-Gruppen geeignet. Zum anderen sind die Kopplungsreagenzien in der Lage, chemisch mit der aushärtenden Lackharzformulierung zu reagieren. Hierzu bietet es sich besonders vorteilhaft an, wenn das Kopplungsreagenz zumindest eine (Meth)acrylat- und/oder zumindest eine Vinyl-Funktion enthält. Besonders bevorzugt werden amorphe Kieselsäuren oder Korund eingesetzt, deren mittlerer Partikeldurchmesser höchstens 100 nm, bevorzugt höchstens 50 nm, sehr bevorzugt höchstens 25 nm beträgt. Erfindungsgemäß werden in Lackformulierungen bis zu 50 Gew.-% solcher anorganischen Oxidpartikel, bevorzugt bis zu 30 Gew.-% eingesetzt.

Rohstoffe, die vorteilhaft im Sinne dieser Erfindung eingesetzt werden können, sind zum Beispiel unter den Markennamen Highlink® von der Firma Clariant (C. Vu, O. LaFerté, A. Eranian, Eur. Coat. J., 2002, 1-2, 64) und Nanocryl® von der Firma Hansechemie (C. Roscher, Eur. Coat. J., 2003, 4, 38) erhältlich.

Vorteilhaft enthalten erfindungsgemäße Formulierungen, aus denen die zumindest eine abriebfeste und flexible Lackschicht A erzeugt wird, bis zu einem Anteil von 50 Gew.-% Polymere, die eine Molmasse von mindestens 5000 g/mol aufweisen. Kommen solche Materialien zum Einsatz, dann liegen sie in einer vorteilhaften Erfindungsauslegung im Wesentlichen frei von reaktiven Gruppen wie insbesondere C-C-Doppelbindungen vor. In einer weiteren vorteilhaften Auslegung tragen solche Polymere funktionelle Gruppen, wie zum Beispiel (Meth)acrylat-Gruppen, die an der Aushärtungsreaktion teilnehmen können. Als Polymere bieten sich insbesondere (Meth)acrylat-Copolymere an aber auch andere gesättigter oder ungesättigter Art (siehe z. B. P. K. T. Oldring (Hrsg.), Chemistry & Technology of UV & EB Formulations for Coatings, Inks & Paints, Bd. 2, 1991, SITA, London, S. 158 - 184]. Polymere sind dann vorteilhaft einsetzbar, wenn sie im Gemisch der übrigen Lackharzkomponenten löslich sind.

Erfindungsgemäße Lackformulierungen, aus denen die zumindest eine abriebfeste und flexible Lackschicht A gewonnen wird, enthalten weiterhin optional aber vorteilhafterweise weitere Bestandteile wie Katalysatoren, Beschleuniger, Lichtschutzmittel wie insbesondere UV-Schutzmittel, Alterungsschutzmittel, Antioxidantien, weitere Stabilisatoren, Flammschutzmittel, Verlaufsmittel, Benetzungsmittel, Gleitmittel, Entschäumer, Entlüfter, Haftvermittler, weitere rheologisch wirksame Additive wie beispielsweise Thixotropiermittel, Mattierungsmittel und/oder weitere Füllstoffe.

In einer speziellen Erfindungsauslegung sind die erfindungsgemäßen Formulierungen, aus der die zumindest eine abriebfeste und flexible Lackschicht A gewonnen wird, frei von silikonhaltigen Additiven.

Insbesondere wenn die Lackformulierung nach der Beschichtung durch elektromagnetische Strahlung und hier insbesondere durch UV-Strahlung gehärtet wird, dann wird der Lackformulierung zumindest eine Sorte eines Photoinitiators zugesetzt.

Geeignete Vertreter solcher Photoinitiatoren sind Typ-I-Photoinitiatoren, also sogenannte α-Spalter wie Benzoin- und Acetophenon-Derivate, Benzilketale oder Acylphosphinoxide, Typ-II-Photoinitiatoren, also sogenannte Wasserstoffabstraktoren wie Benzophenon-Derivate und einige Chinone, Diketone und Thioxanthone. Ferner können TriazinDerivate zur Initiierung radikalischer Reaktionen verwendet werden.

Erfindungsgemäß bevorzugt einsetzbare Photoinitiatoren vom Typ I umfassen beispielsweise Benzoin, Benzoinether wie beispielsweise Benzoinmethylether, Benzoin-iso-propylether, Benzoinbutylether, Benzoin-iso-butylether, Methylolbenzoin-Derivate wie Methylolbenzoinpropylether, 4-Benzoyl-1,3-dioxolan und seine Derivate, Benzilketal-Derivate wie 2,2-Dimethoxy-2-phenylacetophenon oder 2-Benzoyl-2-phenyl-1,3-dioxolan, α,α-Dialkoxyacetophenone wie α,α-Dimethoxyacetophenon und α,α-Diethoxyacetophenon, α-Hydroxyalkylphenone wie 1-Hydroxycyclohexylphenylketon, 2-Hydroxy-2-methyl-1-phenylpropanon und 2-Hydroxy-2-methyl-1-(4-iso-propylphenyl)-propanon, 4-(2-Hydroxyethoxy)-phenyl-2-hydroxy-2-methyl-2-propanon und seine Derivate, α-Aminoalkylphenone wie 2-Methyl-1-[4-(methylthio)-phenyl]-2-morpholinopropan-2-on und 2-Benzyl-2-dimethylamino-1-(4-morpholinophenyl)-butan-1-on, Acylphosphinoxide wie 2,4,6-Trimethylbenzoyldiphenylphosphinoxid und Ethyl-2,4,6-trimethylbenzoylphenylphosphinat und O-Acyl-α-oximinoketone.

Erfindungsgemäß bevorzugt einsetzbare Photoinitiatoren vom Typ II umfassen beispielsweise Benzophenon und seine Derivate wie 2,4,6-Trimethylbenzophenon oder 4,4'-Bis-(dimethylamino)-benzophenon, Thioxanthon und seine Derivate wie 2-iso-Propylthioxanthon und 2,4-Diethylthioxanthon, Xanthon und seine Derivate und Anthrachinon und seine Derivate.

Typ-II-Photoinitiatoren werden besonders vorteilhaft in Kombination mit stickstoffhaltigen Coinitiatoren, den sogenannten Amin-Synergisten eingesetzt. Bevorzugt werden im Sinne dieser Erfindung tertiäre Amine verwendet. Ferner kommen in Kombination mit Typ-II-Photoinitiatoren vorteilhaft Wasserstoffatomdonoren zur Anwendung. Beispiele hierfür sind Substrate, die Amino-Gruppen enthalten. Beispiele für Amin-Synergisten sind Methyldiethanolamin, Triethanolamin, Ethyl-4-(dimethylamino)-benzoat, 2-n-Butoxyethyl-4-(dimethylamino)-benzoat, iso-Acryl-4-(dimethylamino)-benzoat, 2-(Dimethylaminophenyl)-ethanon sowie ungesättigte und damit copolymerisierbare tertiäre Amine, (meth)acrylierte Amine, ungesättigte Amin-modifizierte Oligomere und Polymere auf Polyester- oder Polyetherbasis und Amin-modifizierte (Meth)acrylate.

Es können außerdem polymerisierbare Photoinitiatoren vom Typ 1 und/oder Typ 11 eingesetzt werden.

Im Sinne dieser Erfindung können auch beliebige Kombinationen verschiedener Arten von Typ-1 und/oder Typ-11 Photoinitiatoren eingesetzt werden.

In jedem Fall der Folienbeschichtung besteht die prinzipielle Schwierigkeit, eine ausgewogene Balance zwischen Härte und Flexibilität der Lackschicht zu schaffen. Eine hohe Lackhärte führt zu guter Beständigkeit des Folienprodukts gegenüber Abrieb. Flexibilität dagegen wird gefordert, da der Folienträger selbst flexibel ist und bei der Verarbeitung, also beispielsweise beim Aufwickeln von Bahnen zu Rollen, und ihrer Verwendung, also beispielsweise beim Applizieren um Rundungen oder Kanten, ein Brechen oder Abplatzen der Schutzlackschicht von der Folie vermieden werden muss. Es ist daher darauf zu achten, dass eine Lackformulierung zwar insoweit ausgehärtet werden kann, dass keine Oberflächenklebrigkeit mehr vorhanden ist und alle Reaktivharzbestandteile möglichst quantitativ in das Lacknetzwerk eingebaut sind, die Lackschicht aber trotzdem keine Sprödigkeit aufweist.

Die zumindest eine abriebfeste und flexible Lackschicht A, die in erfindungsgemäßen Verbundfolien zum Einsatz kommt, zeichnet sich dadurch aus, dass sie eine Härte, bestimmt als Bleistifthärte nach ASTM 3363 (siehe Test B), von mindestens 4H, bevorzugt von mindestens 7H aufweist und dass sie eine derartige Flexibilität, bestimmt nach Test C, aufweist, dass die zumindest eine Lackschicht A beim Biegen des erfindungsgemäßen Verbunds um die beiden engbenachbarten Kanten eines Metallbands von 100 µm Dicke, was einer Deformation von 2 x 90° = 180° entspricht, weder bricht noch vom Verbund abplatzt.

Die zumindest eine abriebfeste und flexible Lackschicht A weist ein Flächengewicht zwischen einschließlich 0,5 g/m² und einschließlich 50 g/m², bevorzugt zwischen einschließlich 2 g/m² und einschließlich 15 g/m² auf.

Die zumindest eine abriebfeste und flexible Lackschicht A weist bevorzugt eine außerordentlich geringe Oberflächenrauhigkeit auf. Erfindungsgemäße Lackschichten zeigen eine Oberflächenrauhigkeit nach Test D, die durch Rz-Werte von höchstens 0,3 µm, bevorzugt von höchstens 0,15 µm, sehr bevorzugt von höchstens 0,08 µm gegeben sind.

Die zumindest eine abriebfeste und flexible Lackschicht zeichnet sich gleichsam durch besonders hohe optische Qualität aus.

So ist die zumindest eine abriebfeste und flexible Lackschicht A bevorzugt transparent. In dieser Erfindungsauslegung weist sie eine Transmission bei 400 nm, 600 nm und 800 nm von mindestens 85 %, bevorzugt von mindestens 90 %, sehr bevorzugt von mindestens 92 % nach Test E auf.

So weist die zumindest eine abriebfeste und flexible Lackschicht A eine besonders geringe Trübung, gegeben durch einen Haze-Wert bestimmt nach Test F von höchstens 5 %, bevorzugt von höchstens 2,5 %, sehr bevorzugt von höchstens 1 % auf.

Zur Herstellung der zumindest einen Trägerfolie B können prinzipiell alle filmbildenden und/oder extrusionsfähigen Polymere eingesetzt werden. Siehe hierzu beispielsweise die Zusammenstellung von Nentwig [J. Nentwig, Kunststofffolien, Kapitel 5, 2. Aufl., 2000, C. Hanser, München]. In einer bevorzugten Auslegung werden Polyolefine eingesetzt. Bevorzugte Polyolefine werden aus Ethylen, Propylen, Butylen und/oder Hexylen hergestellt, wobei jeweils die reinen Monomere polymerisiert werden können oder Mischungen aus den genannten Monomeren copolymerisiert werden. Durch das Polymerisationsverfahren und durch die Auswahl der Monomere lassen sich die physikalischen und mechanischen Eigenschaften der Polymerfolie steuern, wie z. B. die Erweichungstemperatur und/oder die Reißfestigkeit.

In einer weiteren bevorzugten Auslegung dieser Erfindung werden Polyvinylacetate eingesetzt. Polyvinylacetate können neben Vinylacetat auch Vinylalkohol als Comonomer enthalten, wobei der freie Alkoholanteil in weiten Grenzen variiert werden kann. In einer weiteren bevorzugten Auslegung dieser Erfindung werden Polyester als Trägerfolie eingesetzt. In einer besonders bevorzugten Auslegung dieser Erfindung werden Polyester auf Basis von beispielsweise Polyethylenterephthalat (PET) oder Polybutylenterephthalat (PBT) eingesetzt. In einer weiteren bevorzugten Auslegung dieser Erfindung werden Polyvinylchloride (PVC) als Folie eingesetzt. Zur Steigerung der Temperaturstabilität können die in diesen Folien enthaltenen Polymerbestandteile unter Verwendung versteifender Comonomere hergestellt werden. Weiterhin können die Folien strahlenvernetzt werden, um eine ebensolche Eigenschaftsverbesserung zu erhalten. Kommt PVC als Folienrohstoff zum Einsatz, kann es optional plastifizierende Komponenten enthalten (Weichmacher). Es ist auch möglich, andere halogenierte Kohlenwasserstoffe als Folienbasismaterial wie zum Beispiel Polyvinylidenchlorid oder fluorierte Systeme zu nutzen. In einer weiteren bevorzugten Auslegung dieser Erfindung werden Polyamide zur Herstellung von Folien eingesetzt. Die Polyamide können aus einer Dicarbonsäure und einem Diamin oder aus mehreren Dicarbonsäuren und Diaminen bestehen. Neben Dicarbonsäuren und Diaminen lassen sich auch höher funktionelle Carbonsäuren und Amine auch in Kombination mit den oben genannten Dicarbonsäuren und Diaminen einsetzen. Zur Versteifung der Folie werden bevorzugt zyklische, aromatische oder heteroaromatische Ausgangsmonomere eingesetzt. In einer weiteren bevorzugten Auslegung dieser Erfindung werden Polymethacrylate zur Herstellung von Folien eingesetzt. Hier kann durch die Wahl der Monomere (Methacrylate und z. T. auch Acrylate) die Glasübergangstemperatur der Folie gesteuert werden. Weiterhin können die Polymethacrylate auch Additive enthalten, um z. B. die Flexibilität der Folie zu erhöhen oder die Glasübergangstemperatur ab- oder heraufzusetzen oder die Ausbildung von kristallinen Segmenten zu minimieren. In einer weiteren bevorzugten Auslegung dieser Erfindung werden Polycarbonate zur Herstellung von Folien eingesetzt. Ferner können in einer weiteren Auslegung dieser Erfindung auf Vinylaromaten und Vinylheteroaromaten basierende Polymere und Copolymere zur Herstellung der zumindest einen Trägerfolie B eingesetzt werden.

Die zumindest eine Trägerfolie B kann wahlweise monoaxial orientiert, biaxial orientiert oder nicht orientiert vorliegen.

Zur Herstellung eines folienförmigen Materials kann es angebracht sein, Additive und weitere Komponenten hinzuzugeben, die die filmbildenden Eigenschaften verbessern, die Neigung zur Ausbildung von kristallinen Segmenten vermindern und/oder die mechanischen Eigenschaften gezielt verbessern oder auch gegebenenfalls verschlechtern. Als weitere optional einsetzbare Additive können Alterungsschutzmittel, Lichtschutzmittel wie insbesondere UV-Schutzmittel, Antioxidantien, weitere Stabilisatoren, Flammschutzmittel, Pigmente, Farbstoffe und/oder Blähmittel enthalten sein.

Die zumindest eine Trägerfolie B kann selbst als Einschichtaufbau zum Einsatz kommen, oder auch als mehrschichtiger Verbund, der beispielsweise durch Coextrusion gewonnen wurde. Ferner kann die Trägerfolie auch auf einer und/oder beiden Seiten vorbehandelt und/oder mit einer funktionellen Schicht versehen sein. Sind beide Seiten vorbehandelt und/oder beschichtet, dann kann die Art und/oder Ausprägung der Vorbehandlung und/oder Beschichtung unterschiedlich oder gleich sein. Eine solche Vorbehandlung und/oder Beschichtung kann beispielsweise zu einer verbesserten Verankerung einer weiteren Schicht dienen wie beispielsweise der zumindest einen Haftklebemassenschicht C oder der zumindest einen Lackschicht A oder anderer optional einsetzbarer Schichten. Zu diesem Zweck ist es besonders vorteilhaft, wenn eine oder beide Seiten der Trägerfolie mit einer oder verschiedenen Sorten an Primern und/oder wenn eine oder beide Seiten der Trägerfolie durch eine Corona-Behandlung und/oder eine Beflammung und/oder eine Plasmabehandlung und/oder weitere Methoden zur Oberflächenaktivierung vorbehandelt werden.

Die zumindest eine Trägerfolie B kann im Sinne dieser Erfindung transparent und farblos oder aber transparent und farbig sein. Außerdem ist es erfindungsgemäß, wenn die Folie nicht transparent ist und zudem weiß, grau, schwarz oder farbig.

Die zumindest eine Schicht eines Trägermaterials B weist eine Schichtdicke zwischen einschließlich 5 µm und einschließlich 500 µm, bevorzugt zwischen einschließlich 10 µm und einschließlich 100 µm auf.

Ist die erfindungsgemäße Verbundfolie zusätzlich mit einer Haftklebemassenschicht C versehen, dann besteht diese aus einer beliebigen Haftklebemasse nach dem Stand der Technik (siehe hierzu beispielsweise D. Satas (Hrsg.), Handbook of Pressure Sensitive Adhesive Technology, 2. Aufl., 1989, Van Nostrand Reinhold, New York), insbesondere auf Basis von Acrylat-, Naturkautschuk-, Synthesekautschuk- oder Ethylenvinylacetat. Auch Kombinationen dieser und weiterer Systeme sind erfindungsgemäß. Sehr bevorzugt kommen Haftklebemassen auf Basis von Acrylatcopolymeren zum Einsatz.

Beispiele für erfindungsgemäß einsetzbare Haftklebemassen sind alle linearen, sternförmigen, verzweigten, gepfropften oder andersartig gestalteten Polymere, bevorzugt Homopolymere, statistische Copolymere oder Blockcopolymere. Als Beispiele, aber ohne eine Einschränkung vornehmen zu wollen, seien als besonders vorteilhaft im Sinne dieser Erfindung statistische Copolymere ausgehend von α,β-ungesättigten Estern und/oder ausgehend von Alkylvinylethern genannt. Besonders bevorzugt werden α,β-ungesättigte Alkylester der allgemeinen Struktur

CH₂=CH(R¹)(COOR²) (I)

verwendet, wobei R¹ = H oder CH₃ und R² = H oder lineare, verzweigte oder ringförmige, gesättigte oder ungesättigte Alkylreste mit 1 bis 30 C-Atomen darstellt.

Monomere, die sehr bevorzugt im Sinne der allgemeinen Struktur (I) eingesetzt werden, umfassen Acryl- und Methacrylsäureester mit Alkylgruppen bestehend aus 4 bis 18 C-Atomen. Spezifische Beispiele für entsprechende Verbindungen sind, ohne sich durch diese Aufzählung einschränken zu wollen, n-Butylacrylat, n-Pentylacrylat, n-Hexylacrylat, n-Heptylacrylat, n-Octylacrylat, n-Nonylacrylat, Laurylacrylat, Hexadecylacrylat, Stearylacrylat, Stearylmethacrylat, Behenylacrylat deren verzweigte Isomere, wie z. B. 2-Ethylhexylacrylat, iso-Octylacrylat, iso-Decylacrylat und Tridecylacrylat sowie cyclische Monomere wie z. B. Cyclohexylacrylat, Tetrahydrofurfurylacrylat, Dihydrodicyclopentadienylacrylat, 4-tert-Butylcyclohexylacrylat, Norbornylacrylat und Isobornylacrylat.

Ebenfalls einsetzbar als Monomere sind Acryl- und Methacrylsäureester, die aromatische Reste enthalten, wie z. B. Phenylacrylat, Benzylacrylat, Phenylmethacrylat, Benzylmethacrylat, Phenoxyethylacrylat, ethoxyliertes Phenolacrylat oder ethoxyliertes Nonylphenolacrylat.

Weiterhin können optional Vinylmonomere aus den folgenden Gruppen eingesetzt werden: Vinylester, Vinylether, Vinylhalogenide, Vinylidenhalogenide, sowie Vinylverbindungen, die aromatische Zyklen oder Heterozyklen in α-Stellung enthalten. Für die optional einsetzbaren Vinylmonomere seien beispielhaft ausgewählte erfindungsgemäß einsetzbare Monomere genannt: Vinylacetat, Vinylcaprolactam, Vinylformamid, Vinylpyridin, Ethylvinylether, 2-Ethylhexylvinylether, Butylvinylether, Vinylchlorid, Vinylidenchlorid, Acrylnitril, Styrol und α-Methylstyrol.

Weitere erfindungsgemäß einsetzbare Monomere sind Glycidylmethacrylat, Glycidylacrylat, Allylglycidylether, 2-Hydroxyethylmethacrylat, 2-Hydroxyethylacrylat, 3-Hydroxypropylmethacrylat, 3-Hydroxypropylacrylat, 4-Hydroxybutylmethacrylat, 4-Hydroxybutylacrylat, Acryloylmorpholin, Methacryloylmorpholin, Trimethylolpropanformalmonoacrylat, propoxyliertes Neopentylmethylethermonoacrylat, Tripropylenglykolmethylethermonoacrylat, ethoxyliertes Ethylacrylat wie Ethyldiglykolacrylat, propoxyliertes Propylacrylat, Acrylsäure, Methacrylsäure, Itaconsäure und deren Ester, Crotonsäure und deren Ester, Maleinsäure und deren Ester, Fumarsäure und deren Ester, Maleinsäureanhydrid, Methacrylamid sowie N-alkylierte Derivate wie N-Methylolmethacrylamid, Acrylamid sowie N-alkylierte Derivate wie N-Methylolacrylamid, Vinylalkohol, 2-Hydroxyethylvinylether, 3-Hydroxypropylvinylether und 4-Hydroxybutylvinylether.

Bei Kautschuk oder Synthesekautschuk als Ausgangsbasis für die Haftklebemasse sind weitere Variationsmöglichkeiten gegeben, sei er aus der Gruppe der Naturkautschuke oder der Synthesekautschuke oder sei er aus einem beliebigen Verschnitt aus Naturkautschuken und/oder Synthesekautschuken, wobei der Naturkautschuk oder die Naturkautschuke grundsätzlich aus allen erhältlichen Qualitäten wie zum Beispiel Crepe-, RSS-, ADS-, TSR- oder CV-Typen, je nach benötigtem Reinheits- und Viskositätsniveau, und der Synthesekautschuk oder die Synthesekautschuke aus der Gruppe der statistisch copolymerisierten Styrol-Butadien-Kautschuke, der Butadien-Kautschuke, der synthetischen Polyisoprene, der Butyl-Kautschuke, der halogenierten Butyl-Kautschuke, der Acrylat-Kautschuke, der Ethylenvinylacetat-Copolymere und der Polyurethane und/oder deren Verschnitten gewählt werden können.

Als in der Haftklebemassenschicht C optional einsetzbare klebrigmachende Harze sind ausnahmslos alle vorbekannten und in der Literatur beschriebenen Klebharze einsetzbar. Genannt seien stellvertretend die Kolophoniumharze, deren disproportionierte, hydrierte, polymerisierte, veresterte Derivate und Salze, die aliphatischen und aromatischen Kohlenwasserstoffharze, Terpenharze und Terpenphenolharze. Beliebige Kombinationen dieser und weiterer Harze können eingesetzt werden, um die Eigenschaften der resultierenden Klebmasse wunschgemäß einzustellen.

Als ebenfalls optional einsetzbare Weichmacher können alle aus der Selbstklebebandtechnologie bekannten weichmachenden Substanzen eingesetzt werden. Dazu zählen unter anderem die paraffinischen und naphthenischen Öle, (funktionalisierte) Oligomere wie Oligobutadiene und -isoprene, flüssige Nitrilkautschuke, flüssige Terpenharze, pflanzliche und tierische Fette und Öle, Phthalate und funktionalisierte Acrylate. Haftklebemassen, wie sie oben angegeben sind, können zudem weitere Bestandteile wie rheologisch wirksame Additive, Katalysatoren, Initiatoren, Stabilisatoren, Kompatibilisatoren, Kopplungsreagenzien, Vernetzer, Antioxidantien, weitere Alterungsschutzmittel, Lichtschutzmittel, Flammschutzmittel, Pigmente, Farbstoffe, Füllstoffe und/oder Blähmittel enthalten.

Kommt eine Haftklebemassenschicht C zur Anwendung, dann wird die Haftklebemasse im Sinne dieser Erfindung so ausgewählt, dass ihre klebtechnischen Eigenschaften und ihre Alterungsbeständigkeit die an das gesamte einseitig selbstklebende Produkte gestellten Anforderungen im Hinblick auf eine vorübergehende, langandauerende oder permanenten Fixierung auf einem gewünschten Substrat erfüllt.

Die Haftklebemasse in der Haftklebemassenschicht C ist bevorzugt transparent und farblos oder aber transparent und farbig. Sie kann auch nicht transparent sein und zudem weiß, grau, schwarz oder farbig.

Die Haftklebmassenschicht C weist ein Flächengewicht von zwischen einschließlich 2 g/m² und einschließlich 500 g/m², bevorzugt zwischen einschließlich 5 g/m² und einschließlich 100 g/m² auf.

Im Sinne dieser Erfindung kann zur Beschichtung der erfindungsgemäßen Lackformulierungen auf Folien prinzipiell jedes der dem Fachmann bekannten Verfahren ausgewählt werden. Ohne sich einschränken zu wollen, seien beispielhaft Rakelverfahren, Walzenverfahren wie insbesondere Rasterwalzenverfahren, Tauchverfahren, Sprühverfahren, Messerverfahren, Bürstenverfahren, Gießverfahren und Druckverfahren wie insbesondere Offset- oder Flexodruckverfahren genannt. Dabei sind auch Kombinationen verschiedener Verfahren denkbar wie beispielsweise das Mayer-Bar-Verfahren, ein Beschichtungsprozess, der Walzen und Rakel miteinander kombiniert, oder Walz/Gieß-Systeme, bei denen Walzen und Rakel miteinander kombiniert sind und die zusätzlich das Prinzip der Gießbeschichtung einbinden. Einige erfindungsgemäß einsetzbare Verfahren sind beispielsweise bei Scharenberg zu finden [R. T. Scharenberg in Encyclopedia of Polymer Science and Engineering, H. F. Mark, N. M. Bikales, C. G. Overberger, G. Menges (Hrsg.), 3. Band, 2. Aufl., 1985, Wiley, New York].

Erfindungsgemäß kommen bevorzugt solche Verfahren zur Anwendung, die für die zumindest eine Lackschicht A zu einer Oberflächenrauhigkeit nach Test D mit Rz-Werten von höchstens 0,3 µm, bevorzugt von höchstens 0,15 µm, sehr bevorzugt von höchstens 0,08 µm führen.

Zur Eliminierung von Luftsauerstoff, der einen inhibierenden Einfluss auf die Lackhärtung hat, lassen sich im Sinne dieser Erfindung alle Verfahren des Stands der Technik sowie auch Kombinationen verschiedener solcher Verfahren anwenden.

In der Literatur sind vielfältige Möglichkeiten vorgeschlagen worden, wie der negative Einfluss von Luftsauerstoff auf den Aushärtungsprozess unterdrückt werden kann. Eine Reihe von Originalarbeiten, die solche Wege beschreiben, fassen Studer et al. zusammen [K. Studer, C. Decker, E. Beck, R. Schwalm, Progr. Org. Coat., 2003, 48, 92]. So wird in dieser Zusammenstellung der Einsatz von Aminen, die Verwendung von Substanzen, die in der Lage sind, triplett-Sauerstoff in singulett-Sauerstoff zu konvertieren, eine erhöhte Menge an eingesetztem Photoinitiator, eine höhere UV-Dosis, die Einführung von Schutzschichten basierend auf Wachs oder Wasserfilmen, eine höhere Monomerreaktivität und eine höhere Viskosität der Lackformulierung als förderlich zur Unterdrückung des inhibierenden Einflusses von Luftsauerstoff genannt. Spezielle Photoinitiatortypen wurden zum selben Zweck getestet [H. J. Hageman, L. G. J. Jansen, Makromol. Chem., 1988, 189, 2781].

Ein eleganter Weg ist die Verdrängung von Luftsauerstoff durch Verwendung einer inerten Atmosphäre wie Stickstoff, Argon oder Kohlendioxid. Beispiele für solche Verfahren wurden vor einiger Zeit in US 3,840,448 durch Union Carbide Corp. und kürzlich durch Studer et al. [K. Studer, C. Decker, E. Beck, R. Schwalm, Progr. Org. Coat., 2003, 48, 92 sowie ibid, 101] veröffentlicht.

Besonders bevorzugt wird nach der Beschichtung der Lackformulierung auf die Folienbahn der Trägerfolie B eine Schutzfolie nass eingedeckt und anschließend durch diese Schutzfolie bestrahlt und damit ausgehärtet [A. van Neerbos, J. Oil Col. Chem. Assoc., 1978, 61, 241]. Die beschichtete und bestrahlte Trägerfolie B bildet an die Verbundfolie und kann dann gemeinsam mit der Schutzfolie weiterverarbeitet werden, also beispielsweise zu Ballen aufgerollt oder direkt Schneid- oder Stanzprozessen zugeführt werden. Die Schutzfolie wird zu einem beliebigen Zeitpunkt zwischen dem zumindest einen Aushärtungsschritt und der Applikation der erfindungsgemäßen Verbundfolie bei ihrer Anwendung ausgedeckt. Die Ausdeckung erfolgt bevorzugt vor der Konfektionierung des bahnförmigen Materials und sehr bevorzugt vor einem etwaigen Aufrollen des bahnförmigen Materials zu Ballen.

Die Schutzfolie ist bevorzugt transparent, insbesondere wenn zur Aushärtung elektromagnetische Strahlung wie UV-Strahlung zum Einsatz kommt. Als Folienmaterialien für erfindungsgemäß einsetzbare Schutzfolien können prinzipiell alle solchen eingesetzt werden, die nach der Vernetzung der flüssigen Lackschicht wieder delaminiert werden können, ohne dass die dann im Wesentlichen ausgehärtete Lackschicht beschädigt wird. Es ist also wichtig, dass die Folienoberfläche nicht chemisch mit der aushärtenden Lackschicht reagiert. Zu diesem Zweck kann die Schutzfolie auch mit einer speziellen Schicht versehen sein, wie beispielsweise einer Trennschicht wie beispielsweise einer Silikonisierung oder einer Trennschicht basierend of Polyolefinen, insbesondere Polyethylen, oder basierend auf teil- oder perfluorierten Kohlenwasserstoffen insbesondere polymerer Art. Im erfinderischen Sinne können beispielsweise Polyolefinfolien oder Polyesterfolien, wie sie in der Literatur beschrieben wurden [EP 50 996 B1 der Mitsui Petrochemical; C. Peinado, E. F. Salvador, A. Alonso, T. Corrales, J. Baselga, F. Catalina, J. Polym. Sci. A - Polym. Chem., 2002, 40, 4236] oder weitere, die dieser Anforderung genügen, verwendet werden.

Besonders bevorzugt kommen solche Folientypen als Schutzfolien zum Einsatz, für die neben den oben genannten Kriterien zusätzlich eine definierte Rauhigkeit auf der zur Lackschicht weisenden Seite aufweisen. Insbesondere für hochwertige optische Anwendungen reicht unter Umständen ein für das menschliche Auge vernehmbarer Glanz [P. Dufour in Chemistry & Technology of UV & EB Formulation for Coatings, Inks & Paints, P. K. T Oldring (Hrsg.), Band 1, 1991, SITA Technology, London, S. 27] nicht als Kriterium für die Oberflächenqualität einsetzbarer Schutzfolien aus. Die Einsetzbarkeit von Schutzfolien wird vielmehr nach Test D über die Oberflächenrauhigkeit sowie die Trübung über den Haze-Wert nach Test F bestimmt. Erfindungsgemäß besonders bevorzugt einsetzbare Schutzfolien weisen auf der zur Lackschicht weisenden Seite eine Rauhigkeit nach Test D, gegeben durch Rz-Werte von höchstens 0,3 µm, bevorzugt von höchstens 0,15 µm, sehr bevorzugt von höchstens 0,08 µm, auf. Sie zeigen einen Haze-Wert nach Test F von höchstens 5 %, bevorzugt von höchstens 2,5 %, sehr bevorzugt von höchstens 1 %.

Nach der Beschichtung der Lackformulierung, aus der durch Vernetzung die zumindest eine abriebfeste und flexible Lackschicht A mit besonders hoher optischer Qualität gewonnen wird, und der optionalen aber besonders bevorzugt durchgeführten Eindeckung mit einer Schutzfolie erfolgt der Aushärtungsprozess der flüssigen Lackschicht. Im Sinne dieser Erfindung kommen zu diesem Zweck strahlenchemische Verfahren zum Einsatz. Diese umfassen die Einwirkung elektromagnetischer Strahlung wie insbesondere der UV-Strahlung und/oder von Partikelstrahlung wie insbesondere die Elektronenstrahlung. Mittels kurzzeitiger Einwirkung von Licht in einem Wellenlängenbereich zwischen 200 bis 500 nm und/oder beschleunigter Elektronen wird das beschichtete Lackmaterial, bestrahlt und damit ausgehärtet. Im Fall der UV-Bestrahlung kommen insbesondere Quecksilber-Hochdruck- oder -Mitteldruck-Lampen bei einer Leistung von 80 bis 240 W/cm zum Einsatz. Weitere Strahlungsquellen, die im Sinne dieser Erfindung einsetzbar sind, sind dem Fachmann geläufig. Wahlweise wird das Emissionsspektrum der Lampe auf den eingesetzten Photoinitiator abgestimmt oder die Art des Photoinitiators an das Lampenspektrum angepasst. Die Bestrahlungsintensität wird der jeweiligen Quantenausbeute des UV-Photoinitiators und der Bahngeschwindigkeit angepasst.

Kommt zur Aushärtung der Lackschicht A die Bestrahlung mit beschleunigten Elektronen zum Einsatz, was auch in Kombination mit einer UV-Vernetzung geschehen kann, dann umfassen typische Bestrahlungsvorrichtungen Linearkathodensysteme, Scannersysteme bzw. Segmentkathodensysteme, sofern es sich um Elektronenstrahlbeschleuniger handelt. Typische Beschleunigungsspannungen liegen im Bereich zwischen 50 kV und 1 MV, vorzugsweise 80 kV und 300 kV. Die angewandten Bestrahlungsdosen liegen zwischen 5 bis 250 kGy, insbesondere zwischen 20 und 100 kGy.

Die erfindungsgemäßen Verbundfolien werden bevorzugt zu Dekorationszwecken, als robuste informationstragende Artikel und/oder in Produkten oder als Produkte, die zur Datenspeicherung genutzt werden können, eingesetzt.

Erfindungsgemäße Verbundfolien, die zu Dekorationszwecken eingesetzt werden, enthalten dekorative Elemente beispielsweise aber bevorzugt in Form einer Bedruckung, die sich auf einer beliebigen Schicht der erfindungsgemäßen Verbundfolie unterhalb der zumindest einen abriebfesten und flexiblen Lackschicht A befindet. Dekorative Elemente können beispielsweise Muster beliebiger Art sein. Zudem ist es im Sinne dieser Erfindung möglich, dass zumindest eine beliebige Schicht der erfindungsgemäßen Verbundfolie weiß, grau, schwarz oder farbig ausgestaltet ist. Ist diese zumindest eine Schicht farbig, dann kann sie zusätzlich wahlweise transparent oder nicht transparent sein. Solche einseitig selbstklebenden Verbundfolien kommen bevorzugt als Selbstklebefolien, zugeschnitten zu beliebigen Formen, zum Einsatz, um beliebige Substrate mit der entsprechenden in der Verbundfolie enthaltenden Dekoration zu versehen. Ist das Produkt beispielsweise farbig und transparent, dann können mit seiner Hilfe Verglasungen auf einfache Weise farbig gestaltet werden. Die zumindest eine abriebfeste und flexible Lackschicht A gewährleistet dann, dass der optische Eindruck wie zum Beispiel der Glanz der Oberfläche, wenn der Lack so eingestellt wurde, über einen längeren Zeitraum auch trotz mechanischer Beanspruchung konserviert bleibt, als es in einem Vergleichsprodukt der Fall wäre, das keine schützende Lackschicht trägt. Ebenso können beliebige Bauelemente sowie Automobilanbauteile oder Teile von Automobilen mit erfindungsgemäßen Verbundfolien, insbesondere einseitig selbstklebenden Verbundfolien abgeklebt und damit auf einfache Weise beispielsweise weiß, grau, schwarz oder farbig ausgestaltet werden, wenn die erfindungsgemäße Verbundfolie so ausgelegt ist, dass zumindest eine Schicht der Verbundfolie weiß, grau, schwarz oder farbig ausgerüstet ist. Diese Aufzählung kann nur als Beispiel für die erfindungsgemäße Verwendung erfindungsgemäßer Verbundfolien verstanden werden. Eine Vielzahl weiterer Gestaltungsmöglichkeiten und Verwendungen sind ebenfalls möglich.

Erfindungsgemäße Verbundfolien, die Informationen tragen, enthalten diese Informationen beispielsweise aber bevorzugt in Form einer Bedruckung, die sich auf einer beliebigen Schicht der erfindungsgemäßen Verbundfolie unterhalb der zumindest einen abriebfesten und flexiblen Lackschicht A befindet. Informationen können insbesondere beliebige Kombinationen alphanumerischer Zeichen, Balkencodes, Logos und/oder Muster beliebiger Art sein. Weitere Arten von Informationen sind im Sinne dieser Erfindung ebenfalls möglich. Sind die Verbundfolien selbstklebende Verbundfolien, so kommen diese bevorzugt als Selbstklebeetiketten, zugeschnitten oder gestanzt zu beliebigen Formen, zum Einsatz, um beliebige Substrate mit der entsprechenden im Produkt enthaltenden Information zu versehen. Die zumindest eine abriebfeste und flexible Lackschicht A gewährleistet dann, dass die Lesbarkeit der Information über einen längeren Zeitraum auch trotz mechanischer Beanspruchung konserviert bleibt, als es in einem Vergleichsprodukt der Fall wäre, das keine schützende Lackschicht trägt. Durch die zumindest eine Haftklebemasseschicht C lässt sich das erfindungsgemäße Produkt leicht auf beliebige Substrate applizieren. Auch die hier genannten Anwendungen informationstragender Produkte sind nur als Beispiele zu verstehen. Eine Vielzahl weiterer Gestaltungsmöglichkeiten und Verwendungen sind ebenfalls möglich.

Erfindungsgemäße Verbundfolien, die die Möglichkeit zur Datenspeicherung bieten, enthalten diese Datenspeichermöglichkeit in oder auf einer beliebigen Schicht der erfindungsgemäßen Verbundfolie. Eine Datenspeicherung ist insbesondere in Form von Hologrammen möglich, die mit Hilfe eines Lasers in oder auf der entsprechenden Schicht geschrieben und/oder gelesen werden können. Solche Daten können insbesondere beliebige Kombinationen alphanumerischer Zeichen, Balkencodes, Logos und/oder Muster beliebiger Art sein. Weitere Arten von Daten sind im Sinne dieser Erfindung ebenfalls möglich. Daten können ferner in Form von individuellen Hologrammen, individuellen Mikrotexten, individuellen Mikroschriften und/oder individuellen Bildern, wobei die individuellen Hologramme als Dateninhalt neben digitaler Information ebenfalls Mikrotexte, Mikroschriften und/oder Mikrobilder enthalten können, in den erfindungsgemäßen Verbundfolien gespeichert sein. Sind derartige Verbundfolien als selbstklebende Verbundfolien ausgebildet, so kommen diese bevorzugt als Selbstklebeetiketten, zugeschnitten oder gestanzt zu beliebigen Formen, zum Einsatz, um beliebige Substrate mit im Produkt enthaltenen Daten und/oder mit der Möglichkeit, Daten in das Produkt zu schreiben, zu versehen. Die zumindest eine abriebfeste und flexible Lackschicht A gewährleistet dann, dass die Datenlesbarkeit und/oder Datenschreibbarkeit über einen längeren Zeitraum auch trotz mechanischer Beanspruchung konserviert bleibt, als es in einem Vergleichsprodukt der Fall wäre, das keine schützende Lackschicht trägt. Durch die zumindest eine Haftklebemasseschicht C lässt sich die erfindungsgemäße Verbundfolie leicht auf beliebige Substrate applizieren. Auch die hier genannten Anwendungen datentragender Produkte sind nur als Beispiele zu verstehen. Eine Vielzahl weiterer Gestaltungsmöglichkeiten und Verwendungen sind ebenfalls möglich.

### Prüfmethoden

### Test A: Flächengewicht des Lacks

Aus einem beschichteten Muster wurden mittels eines Kreisschneiders fünf Prüfkörper A ausgeschnitten und das Gesamtgewicht durch Wägen bestimmt. Als Referenz wurden aus unbeschichtetem Rohmaterial ebenfalls mittels eines Kreisschneiders fünf Prüfkörper B ausgeschnitten und das Gesamtgewicht durch Wägen bestimmt. Das Flächengewicht des Lacks ist ein Fünftel der Differenz aus dem Gesamtgewicht der fünf Prüfkörper A und dem Gesamtgewicht der fünf Prüfkörper B. Das Flächengewicht wird in g/m² angegeben.

### Test B: Bleistifthärte des Lacks

Die Bleistifthärte des Lacks erfolgte in Anlehnung an ASTM D3363. Ein erfindungsgemäßes Verbundfolienmuster wird derartig auf einer ebenen, glatten und festen Unterlage platziert, dass der Lack nach oben zeigt. Zur Durchführung des Härtetests wurde ein Satz von Bleistiften unterschiedlicher Härte (9B am weichsten bis 9H am härtesten) der Sorte Derwent Graphic Pencils der Firma Derwent, England, verwendet. Vor jedem Test wurden die einzelnen Bleistifte angespitzt. Die Spitzen wurden anschließend mit einem Sandpapier der Sorte Superflex KJ-RR 16-I P600 der Firma Saint-Gobain Gerva B. V. unter einem Winkel von 90° so abgeflacht, dass eine kreisrunde Fläche am Beginn der Mine entstand. Nacheinander wurden Bleistifte verschiedener Härte unter einem Winkel von 45° vom Prüfer weg über die Testoberfläche gestrichen. Dem Lack wird diejenige Bleistifthärte zugeordnet, die dem härtesten Bleistift entspricht, der im Lack gerade keine sichtbare Kratzspur hinterlassen hat. Wird der Lack vom härtesten Bleistift (9H) nicht geritzt, dann wird als Ergebnis > 9H angegeben.

### Test C: Flexibilität der Verbundfolie

Ein Muster der Verbundfolie wird in einem Winkel von 180° um die beiden engbenachbarten Seitenkanten eines flachen, gratfreien Metallbands definierter Dicke gefaltet und geprüft, ob die Lackschicht im Bereich größter Biegung bricht oder abplatzt. Zu diesem Zweck wird ein Horex®-Fühlerlehrenband der Firma Preisser mit einer Stärke von 100 µm verwendet. Das Muster wird so fest um die beiden Kanten gelegt, dass im Kantenbereich keine mit dem Auge sichtbaren Lufteinschlüsse mehr erkennbar sind. Der Lack befindet sich bei dem Test auf der Verbundseite, die nicht zum Fühlerlehrenband zeigt. Widersteht der Lack dieser Beanspruchung, dann wird das Testergebnis mit "bestanden" bezeichnet. Bricht der Lack unter dieser Beanspruchung oder platzt er von einer unteren Lage ab, dann gilt der Test als "nicht bestanden".

### Test D: Oberflächenrauhigkeit der Lackschicht A und der Schutzfolie

Die Oberflächenrauhigkeit der Schutzfolie und der sich auf einer Trägerfolie befindlichen und ausgehärteten Lackschicht A wird mit einem Perthometer PGK der Fa. Mahr, ausgerüstet mit einer Tastspitze MFW250, bestimmt. Die Muster werden in etwa 10 cm x 10 cm große Prüfkörper geschnitten und auf dem Messtisch durch Magneten fixiert. Die konisch geformte Tastspitze wird vorsichtig soweit an das Muster angefahren, so dass sie gerade in Kontakt mit der Musteroberfläche kommt. Der laterale Messbereich ist ± 25 µm. Die Tastspitze wird anschließend über eine Wegstrecke von 1,75 mm geradlinig mit einer Geschwindigkeit von 0,1 mm/s über den Prüfkörper gefahren, währenddessen vertikale Auslenkungen registriert und darüber ein Höhenprofil aufgenommen. Aus den Rohdaten wird gemäß DIN EN ISO 4287 die Oberflächenrauhigkeit als größte Höhe des Profils Rz ausgewertet. Es werden jeweils drei Messungen in Beschichtungsrichtung durchgeführt und der Mittelwert der Einzelmessungen in µm angegeben.

### Test E: Transparenz der Lackschicht A und derSchutzfolie

Ein Objektträger, wie er in der optischen Mikroskopie eingesetzt wird (beispielsweise von der Firma Paul Marienfeld GmbH & Co KG, Lauda-Königshofen), wird mit der zu untersuchenden Lackformulierung, die zur Ausbildung der Lackschicht A gedacht ist, mit einem Auftragsgewicht von 5 µm beschichtet und anschließend ausgehärtet. In einem doppelstrahligen UVIKON 923 UV/VIS-Spektralphotometer der Firma Bio-Tek Kontron Instruments wird bei einer Wellenlänge von 400 nm, 600 nm und 800 nm die Transmission gemessen. Als Referenz dient ein unbeschichteter Objektträger, der in seiner Sorte dem oben genannten gleicht. Die Transmission wird für die jeweilige Messwellenlänge in Prozent der eingestrahlten Lichtintensität angegeben.

Zur Bestimmung der Transmission der Schutzfolie, wird ein Folienmuster in vorgenanntes UV-VIS-Spektrometer gegeben. Es wird die Transmission bei 400 nm gegen Luft als Referenz bestimmt und in % der eingestrahlten Intensität angegeben.

### Test F: Trübung der Lackschicht A und der Schutzfolie (Haze)

Zur Bestimmung der Trübung der Schutzfolie und der sich auf einer Trägerfolie befindlichen und ausgehärteten Lackschicht A kam das Prinzip der Ulbricht-Kugel zur Anwendung. Es wurde eine getSphere-80 Messkugel der Fa. getSpec benutzt. Als Lichtquelle kam eine Halogenlampe HL2000 der Fa. Mikropack zum Einsatz. Vor der Messung wurde mittels eines perfekten Streuers (Weißabgleich, Fa. getSpec) und eines perfekten Reflektors (optischer Spiegel) abgeglichen. Es wurde das Reflexionsspektrum im gesamten sichtbaren Bereich aufgenommen und bei 650 nm ausgewertet. Die Trübung (Haze) wird in % der eingestrahlten Intensität angegeben.

### Beispiel

Eine strahlenhärtbare Lackformulierung zur Herstellung der Lackschicht A, die neben weiteren Bestandteilen ein difunktionelles Acrylat und ein trifunktionelles Acrylat sowie einen Photoinitiator enthielt, wurde mittels eines 0-Rakels (Drahtrakel mit einem Drahtdurchmesser von 0,05 mm der Fa. RK Print Coat Instruments) auf eine 50 µm dicke Polyesterfolie aus Polyethylenterephthalat, die die Trägerfolie B darstellt, beschichtet und durch Zukaschieren unter Verwendung einer Gummiwalze mit einer erfindungsgemäß ausgewählten 50 µm Polyesterfolie aus Polyethylenterephthalat eingedeckt. Die zur Eindeckung verwendete Polyesterfolie wies eine Transparenz bei 400 nm nach Test E von 86 % und eine Oberflächenrauhigkeit auf der zum Lack zeigenden Seite nach Test D von Rz = 0,025 µm auf. Sie zeigte einen Haze-Wert von 0,38 %. Anschließend wurde der Verbund durch die Eindeckfolie mit UV-Strahlung (25 mJ/cm² UV-C; Hg-Strahler undotiert der Fa. Eltosch) ausgehärtet. Die Eindeckfolie konnte anschließend zerstörungsfrei und rückstandslos ausgedeckt werden. Die Lackschicht C zeigte keine für das Auge erkennbare Beschichtungsspuren, war ausgehärtet und wies ein Flächengewicht nach Test A von 2,8 g/m² und eine Bleistifthärte nach Test B von 6H auf. Die Flexibilität des Lacks wurde nach Test C mit dem Ergebnis "bestanden" bestimmt. Die Oberflächenrauhigkeit des Lacks wurde zu Rz = 0,027 µm bestimmt. Die Lackschicht C wies eine Transmission nach Test E von 99,0 % bei 400 nm, 99,6 % bei 600 nm und 99,9 % bei 800 nm Wellenlänge auf. Der Haze-Wert des beschichteten Lackes betrug 0,32 %.

Der Verbundfolie wurde zudem auf der nicht abriebfest ausgerüsteten Seite der Trägerfolie B ein Acrylat-basierendes Transferklebeband, das die Klebschicht C darstellt, zukaschiert. Auf diese Weise ließ sich die Verbundfolie leicht auf beliebigen Substraten applizieren.

## Patentansprüche

1. Verbundfolie, umfassend eine polymere Trägerfolie und eine polymere Lackschicht, wobei die Lackschicht
- eine Abriebfestigkeit, ausgedrückt als Bleistifthärte, von mindestes 4H; und
- eine solche Flexibilität aufweist, dass die Lackschicht bei Biegen der Verbundfolie um die beiden engbenachbarten Kanten eines Metallbandes mit 100 µm Dicke, nicht bricht oder von der Trägerfolie abplatzt;
und wobei die Lackschicht folgende optische Eigenschaften aufweist:
- eine Transmission bei 400, 600 und 800 nm von mindestens 85 %, ermittelt durch Beschichten der die Lackschicht bildenden Formulierung mit 5 µm Dicke auf einen Objektträger, Aushärten der Lackschicht und Bestimmen der Transparenz des Objektträgers mit der Lackschicht im Vergleich zu einem unbeschichteten Objektträger; und
- eine Trübung von höchstens 5 %, bestimmt durch Haze-Messung.

2. Verbundfolie nach Anspruch 1, **dadurch gekennzeichnet, dass** die Lackschicht eine Oberflächenrauhigkeit von höchstens 0,3 µm, ermittelt als Durchschnittswert aus drei Bestimmungen der jeweils größten Höhe des Oberflächenprofils in Beschichtungsrichtung, aufweist.

3. Verbundschicht nach Anspruch 1 oder Anspruch 2, **dadurch gekennzeichnet, dass** die Lackschicht ein Flächengewicht von 0,5 bis 50 g/m² aufweist.

4. Verbundschicht nach einem der vorstehenden Ansprüche, **dadurch gekennzeichnet, dass** die Lackschicht mehrschichtig aufgebaut ist

5. Verbundschicht nach einem der vorstehenden Ansprüche, **dadurch gekennzeichnet, dass** die Lackschicht auf die Trägerfolie beschichtet ist.

6. Verbundfolie nach einem der Ansprüche 1 bis 4, **dadurch gekennzeichnet, dass** zwischen der Lackschicht und der Trägerfolie zumindest eine weitere Schicht ausgebildet ist.

7. Verbundfolie nach einem der vorstehenden Ansprüche, **dadurch gekennzeichnet, dass** die Lackschicht aus einer Formulierung hergestellt ist, die zumindest eine Verbindung umfasst, die zumindest eine (Meth)acrylat-Funktion enthält, und zumindest eine Verbindung umfasst, die zumindest zwei (Meth)acrylat-Funktionen enthält.

8. Verbundfolie nach einem der vorstehenden Ansprüche, **dadurch gekennzeichnet, dass** die Lackschicht aus einer Formulierung hergestellt ist, die frei von silikonhaltigen Additiven ist.

9. Verbundfolie nach einem der vorstehenden Ansprüche, **dadurch gekennzeichnet, dass** die Trägerfolie eine Schichtdicke von 5 µm bis 500 µm aufweist.

10. Verbundfolie nach einem der vorstehenden Ansprüche, **dadurch gekennzeichnet, dass** die Trägerfolie einen mehrschichtigen Aufbau hat.

11. Verbundfolie nach einem der vorstehenden Ansprüche, **dadurch gekennzeichnet, dass** die Trägerfolie transparent und farblos; transparent und farbig; oder nicht transparent und farbig ist.

12. Verbundfolie nach einem der vorstehenden Ansprüche, **dadurch gekennzeichnet, dass** die Trägerfolie aus einem Polyolefin, einem Polyvinylacetat und/oder einem Polyester hergestellt ist.

13. Verbundfolie nach einem der vorstehenden Ansprüche, **dadurch gekennzeichnet, dass** sie ferner eine Klebschicht aufweist.

14. Verbundfolie nach Anspruch 13, **dadurch gekennzeichnet, dass** die Klebschicht auf der Seite der Trägerfolie angeordnet ist, die der Lackschicht abgewandt ist.

15. Verbundfolie nach Anspruch 13 oder 14, **dadurch gekennzeichnet, dass** die Klebschicht aus einer Haftklebemasse gebildet ist.

16. Verbundfolie nach einem der Ansprüche 13 bis 15, **dadurch gekennzeichnet, dass** die Haftklebemasse ein Flächengewicht von 2 g/m² bis 500 g/m², aufweist.

17. Verbundfolie nach einem der Ansprüche 13 bis 15, **dadurch gekennzeichnet, dass** die Haftklebemasse aus einem statistischen Copolymer hergestellt ist, dass aus einer Formulierung erhalten wird, die α,β-ungesättigte Alkylester der allgemeinen Struktur (I)
CH₂=CH(R¹)(COOR²) (I)
umfaßt, wobei R¹ = H oder CH₃ und R² = H oder lineare, verzweigte oder ringförmige, gesättigte oder ungesättigte Alkylreste mit 1 bis 30 C-Atomen darstellt.

18. Verbundfolie nach einem der Ansprüche 13 bis 17, **dadurch gekennzeichnet, dass** die Trägerfolie transparent und farblos; transparent und farbig; oder nicht transparent und farbig ist.

19. Verfahren zur Herstellung einer Verbundfolie einem der Ansprüche 1 bis 18, umfassend
- das Beschichten der die Lackschicht bildenden Lackformulierung auf die Trägerfolie; und
- das Aushärten der Lackformulierung zur Bildung der Lackschicht.

20. Verfahren nach Anspruch 19, **dadurch gekennzeichnet, dass** die Lackformulierung bahnförmig mit einer Arbeitsbreite von zumindest 30 cm auf die Trägerfolie beschichtet wird.

21. Verfahren nach Anspruch 20, **dadurch gekennzeichnet, dass** die Lackformulierung bahnförmig mit einer Arbeitsbreite von zumindest 50 cm auf die Trägerfolie beschichtet wird.

22. Verfahren nach einem der Ansprüche 19 bis 21, **dadurch gekennzeichnet, dass** nach dem Beschichten der Lackformulierung auf die Trägerfolie und vor dem Aushärten der Lackformulierung die Lackformulierung auf der der Trägerfolie abgewandten Seite mit einer Schutzfolie eingedeckt wird.

23. Verfahren nach Anspruch 22, **dadurch gekennzeichnet, dass** die Schutzfolie nach dem Aushärten der Lackschicht und vor dem Aufbringen der Verbundfolie auf ein Substrat entfernt wird.

24. Verfahren nach einem der Ansprüche 19 bis 23, **dadurch gekennzeichnet, dass** die Klebschicht auf die Trägerfolie vor oder nach dem Aufbringen der Lackformulierung auf die Trägerfolie aufgebracht wird.

25. Verwendung einer Verbundfolie nach einem der Ansprüche 1 bis 18, als Dekorfolie, informationstragende Folie, datenenthaltende Folie oder zur Beschichtung eines Substrates.

26. Verwendung nach Anspruch 25, **dadurch gekennzeichnet, dass** das Substrat ein Automobilteil oder ein Teil von Automobilen ist.

27. Verwendung einer einseitig selbstklebend ausgerüsteten Verbundfolie nach zumindest einem der vorangehenden Ansprüche als Selbstklebefolie, Selbstklebeband oder Selbstklebeetikett.

28. Verwendung einer einseitig selbstklebend ausgerüsteten Verbundfolie als dekortragendes, informationstragendes und/oder datenenthaltendes Selbstklebeband, als dekortragende, informationstragende und/oder datenenthaltende Selbstklebefolie oder als dekortragendes, informationstragendes und/oder datenenthaltendes Selbstklebeetikett.

29. Verwendung einer einseitig selbstklebend ausgerüsteten Verbundfolie nach Anspruch 28 zur Speicherung von individuellen Hologrammen, individuellen Mikrotexten, individuellen Mikroschriften und/oder individuellen Bildern, wobei die individuellen Hologramme als Dateninhalt neben digitaler Information ebenfalls Mikrotexte, Mikroschriften und/oder Mikrobilder enthalten können.

30. Verwendung einer einseitig selbstklebend ausgerüsteten Verbundfolie nach Anspruch 28 oder 29 zur Fixierung von Dekoren, Informationen und/oder Daten auf Verpackungen, Produkten, Bauteilen, Automobilteilen oder Teilen von Automobilen.
